# EUROPÄISCHE PATENTSCHRIFT

(11) **EP 1 522 819 B1**
(45) Veröffentlichungstag und Bekanntmachung des Hinweises auf die Patenterteilung: **08.08.2007**
(21) Anmeldenummer: 04023648.1
(22) Anmeldetag: 05.10.2004
(51) Int. Cl.: F42C 13/02, G01S 7/491

(54) **Annäherungssensoranordnung**
Proximity sensor device
Dispositif de senseur de proximité

(30) Priorität: 08.10.2003 DE 10346731
(43) Veröffentlichungstag der Anmeldung: 13.04.2005
(73) Patentinhaber: Diehl BGT Defence GmbH & Co.KG, 88662 Überlingen (DE)
(72) Erfinder: Ganghofer, Andreas, 90552 Röthenbach (DE)
(74) Vertreter: Diehl Patentabteilung

(56) Entgegenhaltungen:
- DE-A- 10 039 422
- DE-A- 10 047 170
- DE-A- 19 704 496
- DE-A- 19 821 974
- GB-A- 2 280 734
- US-A- 4 819 561
- SCHWARTE R. ET AL: "Kamerapixel mit Tiefgang: Durchbruch zum schnellen 3D-Sehen " INTERNET ARTICLE, [Online] 2002, XP002313236 Gefunden im Internet: <URL:http://www.deutscher-zukunftspreis.de /archiv/02_no_03.htm>

## Beschreibung

Die Erfindung betrifft eine Annäherungssensoranordnung, insbesondere für die Zündauslösung eines Gefechtskopfes in einem bestimmten Abstand zu einem zu bekämpfenden Zielobjekt gemäß dem Oberbegriff des Anspruchs 1 für welchen das Dokument GB 2280734 die Grundlage bildet.

Geschosszünder mit derartigen Annäherungssensoranordnungen sind aus dem Stand der Technik in verschiedenen Ausführungsformen bekannt. Der grundsätzliche Aufbau eines solchen herkömmlichen Geschosszünders ist in Figur 3 dargestellt. Der Geschosszünder des sich auf ein Zielobjekt 1 zu bewegenden Gefechtskopfes 2 weist einen Sender 3 und einen Empfänger 4 auf, wobei von Sender und Empfänger in Figur 3 der Einfachheit halber nur die entsprechenden Sammellinsen dargestellt sind. Die Achsen der Sammellinsen des Senders 3 und des Empfängers 4 sind in einem solchen Winkel zueinander geneigt, dass sich ihre Strahlengänge in einer bestimmten Entfernung im Meterbereich vor dem Gefechtskopf 2 schneiden. Der Empfänger 4 empfängt somit nur ein Reflexionssignal zur Auslösung des Geschosszünders, wenn sich der Gefechtskopf in der bestimmten Entfernung von dem Zielobjekt 1 befindet. Um das Reflexionssignal von Streusignalen unterscheiden zu können, emittiert der Sender 3 üblicherweise ein moduliertes Signal.

Bei derartigen Annäherungssensoranordnungen besteht ein Hauptproblem in dem Hintergrundrauschen, dessen Intensitätsanteil im allgemeinen sehr groß ist. Es wird deshalb zum Teil ein relativ hoher Schaltungsaufwand betrieben, um dieses Hintergrundrauschen bei der Auswertung des von dem Empfänger empfangenen Signals zu unterdrücken. Derartige Schaltungen sind zum Beispiel aus der DE 24 56 162 C2, der DE 26 08 066 C2 oder der US-A-3,554,129 bekannt.

Ein weiteres Problem von herkömmlichen Annäherungssensoranordnungen besteht darin, dass Sender und Empfänger exakt justiert sein müssen, um den Geschosszünder in der gewünschten Entfernung von dem Zielobjekt auszulösen. So ist beispielsweise aus der DE 27 14 766 C3 eine spezielle Justiereinrichtung für eine solche Annäherungssensoranordnung bekannt, und die DE 39 27 819 C2 beschreibt eine Annäherungssensoranordnung mit einem Empfänger, der eine spezielle Optik aufweist, um die Funktionsfähigkeit auch nach langer Lagerzeit und nach extremen Temperaturbeanspruchungen zu gewährleisten.

Ein weiterer Nachteil herkömmlicher Annäherungssensoranordnungen von Gefechtsköpfen besteht darin, dass keine Zielidentifizierung möglich ist und deshalb zum Beispiel keine Scheinziele von echten Zielen unterschieden werden können.

Ausgehend von diesem Stand der Technik liegt der Erfindung die Aufgabe zugrunde, eine Annäherungssensoranordnung für die Zündauslösung eines Gefechtskopfes in einem bestimmten Abstand zu einem zu bekämpfenden Zielobjekt bereitzustellen, die ohne aufwendige Justiermaßnahmen des Senders und/oder Empfängers auskommt.

Diese Aufgabe wird erfindungsgemäß durch eine Annäherungssensoranordnung mit den Merkmalen des Anspruchs 1 gelöst. Bevorzugte Aus- bzw. Weiterbildungen der erfindungsgemäßen Anordnung sind Gegenstand der abhängigen Ansprüche.

Die Annäherungssensoranordnung, insbesondere für die Zündauslösung eines Gefechtskopfes in einem bestimmten Abstand zu einem zu bekämpfenden Zielobjekt weist einen Sender zum Aussenden eines modulierten Signals in Richtung auf das Zielobjekt und einen Empfänger zum Empfangen eines Reflexionssignals der Frequenz des von dem Sender ausgesendeten Signals auf. Diese Annäherungssensoranordnung ist erfindungsgemäß dadurch gekennzeichnet, dass der Empfänger wenigstens ein Photomischdetektor (PMD)-Element aufweist, und dass die Annäherungssensoranordnung ferner einen Steuerabschnitt aufweist, der einen Signalgenerator zum Erzeugen eines Modulationssignals und Zuführen des Modulationssignals zu sowohl dem Sender als auch dem wenigstens einen PMD-Element des Empfängers und einen Signalprozessor zum Auswerten der von dem Empfänger ausgegebenen Messsignale enthält.

Durch den Einsatz eines PMD-Elements im Empfänger der Annäherungssensoranordnung ist es möglich, den Abstand zwischen dem Gefechtskopf und dem Zielobjekt zu erfassen. Es ist deshalb nicht erforderlich, den Sender und den Empfänger der Annäherungssensoranordnung mechanisch exakt zu justieren, sondern die Entfernung zur Zündauslösung des Gefechtskopfes kann in dem Steuerabschnitt einprogrammiert werden. Ein weiterer Vorteil der erfindungsgemäßen Annäherungssensoranordnung liegt in der Möglichkeit der Identifikation des Zielobjekts und damit der Unterscheidung zwischen Störzielen und echten Zielen.

Der Empfänger der Annäherungssensoranordnung enthält ein ein- oder vorzugsweise mehrzeiliges Array von PMD-Elementen, sodass der Empfänger einen durch die Größe des Arrays vorgegebenen Bereich des Zielobjekts erfassen kann. Dabei ist das Gesichtsfeld aufgeweitet. Je nach aktueller Entfernung des Annäherungssensors von dem Zielobjekt wird dadurch ein unterschiedlich großer Bereich des Zielobjekts erfasst, sodass während einer Annäherung des Gefechtskopfes an das Zielobjekt das Zielobjekt gewissermaßen gescannt wird.

In einer bevorzugten Ausführungsform der Erfindung enthält der Empfänger ferner eine Optik in Form eines Fischaugenobjektivs oder einer Immersionslinse, welche dem wenigstens einen PMD-Elemente vorgeschaltet ist, sodass ein möglichst großer Bereich des Zielobjekts erfasst werden kann.

In einer weiteren Ausgestaltung der Erfindung weist der Steuerabschnitt einen Speicher zum Speichern von Profilen von Zielobjekten und eine Vergleichseinrichtung zum Vergleichen des von dem Empfänger erfassten Profils mit den gespeicherten Profilen von Zielobjekten auf. Hierdurch können zum Beispiel Scheinziele von "echten" zu bekämpfenden Zielobjekten unterschieden werden.

Weitere Einzelheiten, Merkmale und Vorteile der Erfindung ergeben sich aus der nachfolgenden Beschreibung bevorzugter Ausführungsbeispiele einer Annäherungssensoranordnung gemäß der Erfindung. Es zeigen:
- Figur 1: eine schematische Darstellung zur Erläuterung des Prinzips der vorliegenden Erfindung, wobei Figuren 1A und 1B zwei Zustände mit unterschiedlichem Abstand zwischen Gefechtskopf und Zielobjekt während der Annäherung des Gefechtskopfes zu dem Zielobjekt zeigen;
- Figur 2: ein vereinfachtes Blockschaltbild einer Annäherungssensoranordnung gemäß einem bevorzugtem Ausführungsbeispiel der Erfindung; und
- Figur 3: eine schematische Darstellung zur Erläuterung des Prinzips einer Annäherungssensoranordnung gemäß dem Stand der Technik.

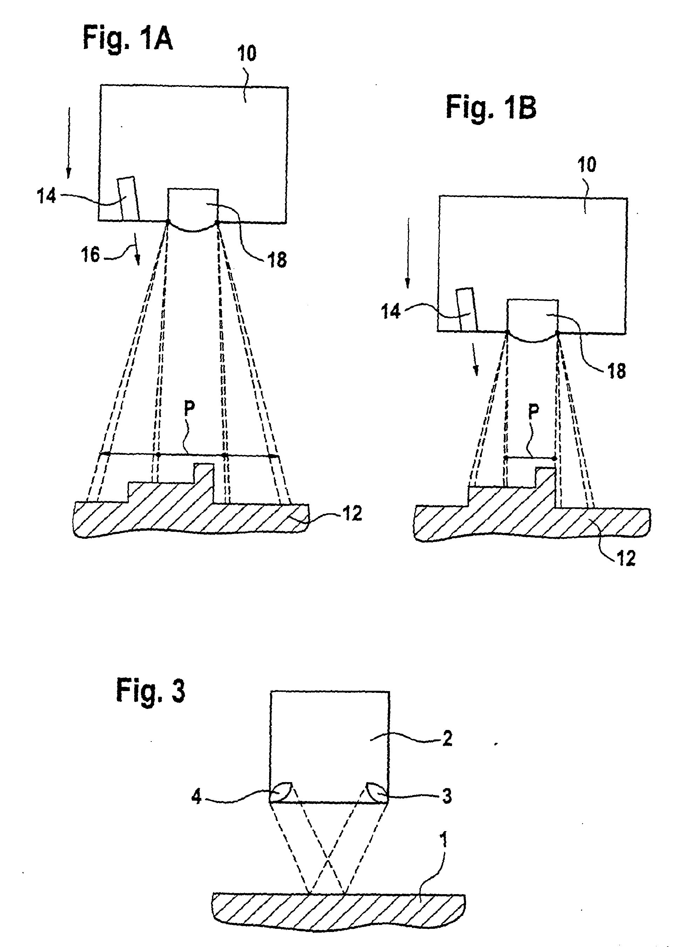

Anhand von Figur 1 wird zunächst das der vorliegenden Erfindung zugrunde liegende Prinzip der Annäherungssensoranordnung erläutert.

Die Annäherungssensoranordnung 10 ist Bestandteil eines Gefechtskopfes und dient der Zündauslösung des Gefechtskopfes in einem bestimmten Abstand zu einem zu bekämpfenden Zielobjekt 12. Bei bestimmten Gefechtsköpfen ist es erforderlich, dass diese in einem gewissen Abstand zu dem Zielobjekt und nicht erst bei Auftreffen auf dem Zielobjekt selbst gezündet werden, um eine bessere ballistische Leistung, d.h. zum Beispiel eine höhere Durchschlagskraft durch die Panzerung des Zielobjekts zu erzielen.

Die Annäherungssensoranordnung 10 weist insbesondere einen Sender 14 zum Aussenden eines modulierten Signals 16 in Richtung auf das Zielobjekt 12 und einen Empfänger 18 zum Empfangen eines Reflexionssignals 20 auf. Die Empfangscharakteristik des Empfängers 18 ist dabei selbstverständlich auf die Frequenz des von dem Sender 14 ausgesendeten Signals 16 abgestimmt. Wie schematisch in Figuren 1A und 1B dargestellt, erfasst der Sender 18 je nach Entfernung zu dem Zählobjekt 12 eine bestimmten Messbereich P, in dem aufgrund der Möglichkeit der Bestimmung der Entfernung zwischen Empfänger 18 und Zielobjekt 12 das jeweilige Profil des Zielobjekts 12 erfasst werden kann.

Wie anhand der zwei Zustände von Figuren 1A und 1B während der Annäherung des Gefechtskopfes an das Zielobjekt 12 erkennbar, verändert sich der Messbereich P im Laufe der Annäherung, sodass die Oberfläche des Zielobjekts 12 gewissermaßen gescannt werden kann. Durch diesen Scanvorgang der Oberfläche des Zielobjekts 12 ist eine Identifizierung des Zielobjekts 12 und insbesondere auch eine Unterscheidung des Zielobjekts 12 von möglichen Scheinzielen möglich. Zusätzlich zu der Erfassung des Profils des Zielobjekts 12 bewirkt der Annäherungssensor 10 selbstverständlich auch eine Zündauslösung des Gefechtskopfes bei Erreichen eines vorbestimmten, einprogrammierten Abstandes zwischen dem Gefechtskopf und einem gewünschten Zielobjekt 12.

Im Gegensatz zu herkömmlichen Annäherungssensoranordnungen ist bei der Annäherungssensoranordnung 10 gemäß der Erfindung keine besondere mechanische Justierung des Senders 14 und des Empfängers 18 erforderlich. Sender 14 und Empfänger 18 müssen lediglich grob in Richtung auf ein mögliches Zielobjekt 12 ausgerichtet werden. Die Bestimmung des Abstandes zur Zündauslösung des Gefechtskopfes wird nicht durch die Ausrichtung von Sender 14 und Empfänger 18 bestimmt, sondern kann frei programmiert werden. Die Annäherungssensoranordnung 10 der Erfindung kann somit auch auf einfache Weise an verschiedene Arten von Gefechtsköpfen, die einen unterschiedlichen Abstand für die optimale Zündauslösung zu einem zu bekämpfenden Zielobjekt erfordern, angepasst werden.

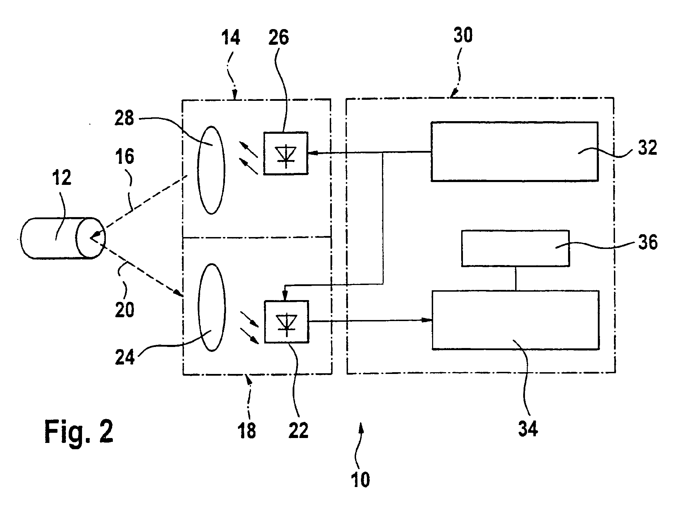

In Figur 2 ist nun der Aufbau eines bevorzugten Ausführungsbeispiels einer Annäherungssensoranordnung 10 von Figur 1 in mehr Einzelheiten veranschaulicht. Insbesondere umfasst die Annäherungssensoranordnung den Sender 14 und den Empfänger 18. Der Empfänger 18 enthält insbesondere ein ein- oder mehrzeiliges Array von PMD-Elementen 22 und eine diesem vorgeschaltete Optik 24 in Form eines Fischaugenobjektivs oder einer Immersionslinse. Der Sender 14 enthält eine Emmissionsvorrichtung 26 und eine dieser nachgeschaltete Optik 28 zum Aufweiten des Strahls des ausgesendeten Signals 16. Die Wellenlänge der von der Emmissionsvorrichtung 26 ausgesendeten Strahlung 16 ist auf den Spektralbereich abgestimmt, der von den PMD-Elementen 22 des Empfängers 18 erfasst werden kann, und ist vorzugsweise im Infrarotbereich gewählt.

Die Annäherungssensoranordnung 10 enthält ferner einen Steuerabschnitt 30, der sowohl mit dem Sender 14 als auch mit dem Empfänger 18 verbunden ist. Der Steuerabschnitt 30 enthält insbesondere einen Signalgenerator 32 zum Ansteuern der Emmissionsvorrichtung 26 des Senders 14 sowie der PMD-Elemente 22 des Empfängers 18 und einen Signalprozessor 34 zum Auswerten des von dem Empfänger 18 erfassten Empfangssignals 20. Die gemäß der Erfindung in dem Empfänger 18 eingesetzten PMD-Elemente 22 sind zum Beispiel in der DE 197 04 496 C2 ausführlich erläutert und dem Fachmann aus einigen weiteren Veröffentlichungen bekannt. Das PMD integriert die Phasenkorrelationsfunktion zwischen Sende- und Empfangssignal mittels CMOS-Technologie in das Detektorelement, sodass separate teure und große Zusatzschaltungen für die Auswertung des Empfangssignals entfallen können. Bezüglich des Aufbaus und der Funktionsweise eines PMD wird der Kürze halber auf die DE 197 04 496 C2 verwiesen.

Für die Funktionsweise des PMD-Elements 22 ist es erforderlich, dass dem PMD-Element ebenfalls das von dem Signalgenerator 32 erzeugte Modulationssignal zugeführt wird. Das Modulationssignal ist bevorzugt ein Pseudo Random Noise - Signal und dient der Intentsitätsmodulation des von dem Sender 14 ausgesendeten Signals 16 mit einem Pseudo Random Noise. Das von dem PMD-Element 22 erfasste Empfangssignal 20 wird innerhalb des PMD-Elements 22 mit dem Modulationssignal des Signalgenerators 32 kreuzkorreliert, um die Laufzeit des Signals und daraus die Entfernung zu dem Zielobjekt 12 zu bestimmen.

Vorzugsweise enthält der Empfänger 18 ein ein- oder mehrzeiliges Array von PMD-Elementen 22, sodass mehrere Messpunkte der Oberfläche eines Zielobjekts 12 erfasst werden können und durch die Entfernungsbestimmung ein Profil des Zielobjekts 12 erfasst werden kann. Die Erfassung des Profils des Zielobjekts 12 wird durch den oben beschriebenen Scanvorgang während der Annäherung des Gefechtskopfes an das Zielobjekt 12 zusätzlich verbessert. Um das Zielobjekt 12 identifizieren und von möglichen Scheinzielen unterscheiden zu können, enthält der Steuerabschnitt 30 ferner einen Speicher 36, in dem Profile von möglichen Zielobjekten gespeichert sind. Der Signalprozessor 34 vergleicht dann das von dem Empfänger 18 erfasste Profil mit den in dem Speicher 36 abgelegten Profilen, um das Objekt, dem sich der Gefechtskopf annähert, als zu bekämpfendes Zielobjekt 12 oder als Scheinziel identifizieren können.

Wie vorstehend erläutert, liegen die besonderen Vorteile der Annäherungssensoranordnung der vorliegenden Erfindung in der Vermeidung einer notwendigerweise exakten mechanischen Justierung von Sender und Empfänger sowie der Möglichkeit der Identifizierung von Zielobjekten, des Erkennens von Falschzielen und der variablen Zündentfernung, die in der Entfernungsmessung begründet liegt.

### Bezugsziffernliste

- 1: Zielobjekt
- 2: Gefechtskopf
- 3: Sender
- 4: Empfänger
- 10: Annäherungssensor
- 12: Zielobjekt
- 14: Sender
- 16: Signal
- 18: Empfänger
- 20: Reflexionssignal
- 22: PMD-Elemente
- 24: Optik
- 26: Emmissionsvorrichtung
- 28: Optik
- 30: Steuerabschnitt
- 32: Signalgenerator
- 34: Signalprozessor
- 36: Speicher

## Patentansprüche

1. Annäherungssensoranordnung (10) für die Zündauslösung eines Gefechtskopfes in einem bestimmten Abstand zu einem zu bekämpfenden Zielobjekt (12) mit einem Sender (14) zum Aussenden eines modulierten Signals (16) in Richtung auf das Zielobjekt und einem Empfänger (18) zum Empfangen eines Reflektionssignals (20) der Frequenz des von dem Sender ausgesendeten Signals, und einem Signalprozessor (34) zum Auswerten der von dem Empfänger (18) ausgegebenen Messignale,
**dadurch gekennzeichnet,**
**dass** der Sender (14) eine Emissionsvorrichtung (26) und eine dieser nachgeschalteten Optik (28) zum Aufweiten des Strahls des ausgesendeten Signals (16) aufweist;
**dass** der Empfänger (18) wenigstens ein Photomischdetektor (PMD)-Element (22) aufweist;
**dass** die Annäherungssensoranordnung (10) ferner einen Steuerabschnitt (30) aufweist, der einen Signalgenerator (32) zum Erzeugen eines Modulationssignals und Zuführen des Modulationssignals zu sowohl dem Sender (14) als auch dem wenigstens einen PMD-Detektorelement (22) des Empfängers (18) enthält; und dass das Gesichtsfeld des Empfängers (18) aufgeweitet wird, so dass bei Zielannäherung der Querschnitt des vom Empfänger (18) erfassten Bereichs stark verkleinert wird, so dass das Zielobjekt gewissermassen gescannt wird und somit eine Zielidentifikation ermöglicht wird.

2. Annäherungssensoranordnung nach Anspruch 1,
**dadurch gekennzeichnet,**
**dass** der Empfänger (18) ein ein- oder mehrzeiliges Array von PMD-Elementen (22) enthält.

3. Annäherungssensoranordnung nach Anspruch 1 oder 2,
**dadurch gekennzeichnet,**
**dass** der Empfänger (18) ferner eine dem wenigstens einen PMD-Element (22) vorgeschaltete Optik (24) in Form eines Fischaugenobjektivs oder einer Immersionslinse enthält.

4. Annäherungssensoranordnung nach einem der Ansprüche 1 bis 3,
**dadurch gekennzeichnet,**
**dass** das von dem Signalgenerator (32) des Steuerabschnitts (30) erzeugte Modulationssignal ein Pseudo-Random-Noise-Signal ist.

5. Annäherungssensoranordnung nach einem der Ansprüche 1 bis 4,
**dadurch gekennzeichnet,**
**dass** der Steuerabschnitt (30) einen Speicher (36) zum Speichern von Profilen von Zielobjekten (12) und eine Vergleichseinrichtung zum Vergleichen des von dem Empfänger (18) erfassten Profils mit den gespeicherten Profilen von Zielobjekten (12) aufweist.

6. Annäherungssensoranordnung nach einem der vorhergehenden Ansprüche,
**dadurch gekennzeichnet,**
**dass** der Zündstrahl variabel eingestellt werden kann.

7. Annäherungssensoranordnung nach einem der vorhergehenden Ansprüche,
**dadurch gekennzeichnet,**
**dass** der Zündabstand während des Anflugs geändert werden kann.

## Claims

1. Proximity sensor arrangement (10) for firing the detonator of a warhead at a specific distance from a target object (12) to be engaged, with a transmitter (14) for transmitting a modulated signal (16) in the direction of the target object and a receiver (18) for receiving a reflection signal (20) of the frequency of the signal transmitted by the transmitter, and a signal processor (34) for evaluating the measuring signals transmitted from the receiver (18),
**characterized in that**
the transmitter (14) has an emission device (26) and a downstream lens (28) for expanding the beam of the transmitted signal (16);
the receiver (18) has at least one photo-mix detector (PMD) element (22);
the proximity sensor arrangement (10) also has a control section (30) that contains a signal generator (32) for generating a modulation signal and for sending the modulation signal to both the transmitter (14) and to the at least one PMD detector element (22) of the receiver (18); and the visual field of the receiver (18) is expanded so that when approaching the target the cross section of the area detected by the receiver (18) is substantially reduced so that the target object is scanned so to speak and it is thus possible for a target to be identified.

2. Proximity sensor arrangement according to Claim 1,
**characterized in that**
the receiver (18) has a single- or multiple-line array of PMD elements (22).

3. Proximity sensor arrangement according to Claim 1 or 2,
**characterized in that**
the receiver (18) also has one lens (24) upstream of the at least one PMD element (22) in the form of a fish eye lens or an immersion lens.

4. Proximity sensor arrangement according to one of Claims 1 to 3,
**characterized in that**
the modulation signal generated by the signal generator (32) of the control section (30) is a pseudo-random noise signal.

5. Proximity sensor arrangement according to one of Claims 1 to 4,
**characterized in that**
the control section (30) has a memory (36) for storing profiles of target objects (12) and a comparison device for comparing the profile acquired by the receiver (18) with the stored profiles of target objects (12).

6. Proximity sensor arrangement according to one of the preceding claims,
**characterized in that**
the firing beam can be variably set.

7. Proximity sensor arrangement according to one of the preceding claims,
**characterized in that**
the firing distance can be changed during the approach flight.

## Revendications

1. Configuration de détecteur de proximité (10) destinée au déclenchement de l'allumage d'une tête de combat à une distance déterminée d'un objet cible à combattre (12), configuration munie d'un émetteur (14) pour l'émission d'un signal modulé (16) dans la direction de l'objet cible et d'un récepteur (18) pour la réception d'un signal réfléchi (20) de fréquence égale à celle du signal émis par l'émetteur, ainsi que d'un processeur de signaux (34) pour l'exploitation des signaux de mesure délivrés par le récepteur (18),
**caractérisée en ce que** l'émetteur (14) présente un dispositif d'émission (26) et, placé en aval de celui-ci, un système optique (28) pour élargir le rayon du signal émis (16); **en ce que** le récepteur (18) présente au moins un élément de détecteur à mélange photonique (PMD) (22); **en ce que** la configuration de détecteur de proximité (10) présente en outre une section de commande (30) qui contient un générateur de signaux (32) pour produire un signal de modulation et amener le signal de modulation non seulement jusqu'à l'émetteur (14), mais aussi jusqu'audit au moins un élément de détecteur PMD (22) du récepteur (18); et **en ce que** le champ visuel du récepteur (18) est élargi de façon que, lors de l'approche de la cible, la section transversale du domaine saisi par le récepteur (18) soit fortement réduite, de façon que l'objet cible soit en quelque sorte scanné et qu'une identification de la cible soit ainsi rendue possible.

2. Configuration de détecteur de proximité selon la revendication 1, **caractérisée en ce que** le récepteur (18) contient un groupement d'éléments PMD (22) à une ou plusieurs lignes.

3. Configuration de détecteur de proximité selon la revendication 1 ou 2, **caractérisée en ce que** le récepteur (18) contient en outre un système optique (24) placé en amont de l'au moins un élément PMD (22) sous la forme d'un objectif en oeil de poisson ou d'une lentille à immersion.

4. Configuration de détecteur de proximité selon l'une quelconque des revendications 1 à 3, **caractérisée en ce que** le signal de modulation produit par le générateur de signaux (32) de la section de commande (30) est un signal de bruit pseudo-aléatoire.

5. Configuration de détecteur de proximité selon l'une quelconque des revendications 1 à 4, **caractérisée en ce que** la section de commande (30) présente une unité de mémoire (36) pour mémoriser des profils d'objets cibles (12) et un dispositif de comparaison pour comparer le profil détecté par le récepteur (18) avec les profils d'objets cibles (12) mémorisés.

6. Configuration de détecteur de proximité selon l'une quelconque des revendications précédentes, **caractérisée en ce que** le rayon d'allumage peut être réglé de manière variable.

7. Configuration de détecteur de proximité selon l'une quelconque des revendications précédentes, **caractérisée en ce que** la distance d'allumage peut être modifiée pendant l'approche.
